# EUROPEAN PATENT SPECIFICATION

(11) **EP 1 680 329 B1**
(45) Date of publication and mention of the grant of the patent: **03.09.2008**
(21) Application number: 04798253.3
(22) Date of filing: 01.11.2004
(51) Int. Cl.: B65D 19/00

(54) **PALLET ARRANGEMENT FOR CONVEYOR**
PALETTENANORDNUNG FÜR FÖRDEREINRICHTUNG
TRANSPORTEUR

(30) Priority: 03.11.2003 FI 20031591
(43) Date of publication of application: 19.07.2006
(73) Proprietor: Kone Corporation, 00330 Helsinki (FI)
(72) Inventor: MUSTALAHTI, Jorma, FI-05620 Hyvinkää (FI); AULANKO, Esko, FI-04230 Kerava (FI)
(74) Representative: Zipse Habersack Kritzenberger
(86) International application number: PCT/FI2004/000644
(87) International publication number: WO 2005/042362

(56) References cited:
- JP-A- 58 100 080
- US-A- 4 645 059
- US-A- 6 085 891

## Description

The present invention relates to a pallet arrangement for a travelator or equivalent as defined in the preamble of claim 1.

Like escalators, travelators are conveying devices designed to move people or goods. They differ from escalators e.g. in that they often work in a substantially horizontal position or in a slightly inclined position relative to their direction of motion so that successive steps, i.e. pallets, form a substantially even and rectilinear track instead of stair-like steps as in escalators. Travelators are also referred to as moving sidewalks and autowalks.

In prior-art travelators, autoramps and escalators, like for example US-A-4645059, the pallets are typically made from aluminum or other suitable metal or alloy pressure-molded as a single piece. A problem with these constructions is that the pressure-molding tools applicable for this purpose are very expensive. A further problem is that separate expensive tools are needed for each step or pallet type and for each width.

In addition, prior-art pallet constructions have e.g. plastic comb strips or equivalent used as decorative or warning elements. A problem with these solutions is that mounting the comb strips is a difficult and time-consuming operation because in prior-art constructions they are generally fastened by means of screws to the routed edges of the steps or pallets.

Another known technique in prior-art pallet structures is to illuminate the gap between steps or pallets from below to warn about the approaching end of the moving track of the travelator. However, a problem is the narrow width of the aforesaid gap, which in prior-art solutions is generally only about three to six mm. Therefore, the warning light has a weak attention-arousing effect, which is why the warning is easily overlooked.

The object of the present invention is to overcome the above-mentioned drawbacks and achieve an easily variable pallet structure of economical cost for use in a travelator, autoramp, escalator or equivalent, a pallet structure that will also allow safety-improving solutions and various visual functions, such as the presentation of information or advertisements, and that also allows fast and economical maintenance of the pallets because the surfacing part is easily replaceable and additionally permits the replacement of worn parts only, making it unnecessary to replace the entire pallet due to wear of the surfacing. The pallet arrangement of the invention is characterized by what is disclosed in the characterization part of claim 1. Features of preferred embodiments are presented in the other claims. The inventive content disclosed in the application can also be defined in other ways than is done in the claims below. The inventive content may also consist of several separate inventions, especially if the invention is considered in the light of expressed or implicit sub-tasks or in respect of advantages or sets of advantages achieved. In this case, some of the attributes contained in the claims below may be superfluous from the point of view of separate inventive concepts. An example of such objectives or tasks is clarification of the production process and installation. The features of different embodiments of the invention and those of the described applications of the invention can be combined with the embodiments defined or they can replace features of the embodiments as far as technically reasonable.

The advantages of the pallet arrangement of the invention include low manufacturing costs and a surface structure consisting of easily variable surfacing parts. Another advantage is that user safety is improved, because the light effects indicating the end of the moving track can be easily implemented so that they will be more readily perceivable than in prior-art solutions and additionally the gaps between steps or pallets can be sealed better than in prior-art solutions. A further advantage is that the surface of the pallets can be used better than before as a displaying surface for notices or advertisements. An advantage is also the fact that maintenance of the equipment becomes easier and cheaper because only the surfacing parts subject to wear need to be replaced. An additional advantage is that the surfacing parts are fastened to the body of the step or pallet by profile-locked snap-on couplings or equivalent that can be easily released and locked, allowing the joints to be easily uncoupled using a suitable tool. An additional advantage are small investments on tools, and therefore the pallets cut to a suitable length from extruded long profiles or their surfacing parts can be easily and quickly replaced with a structure of some other type or shape if desirable.

The pallet body being made from extruded profile or consisting of some other suitable profile structure, in a preferred case this profile shape is provided with fastening points both for the mounting of wheels and for elements for the transmission of the driving power needed to move the pallets. The wheel or fastening element transmitting driving power, which is attached to a chain or other means transmitting driving power to the pallet, is preferably connected to a fastening point in the pallet via a knuckle pin or equivalent. In the direction of motion of the pallet, the fastening point for the transmission of driving power is located between the frontmost wheel and the hindmost wheel, preferably at the same level with the axles of the wheels. The body itself is preferably rigid enough to receive all the strain caused by the load and the movement of the pallet on its track. The knuckle pins or other fastening means and the cover plates of the pallet may also contribute towards increasing the rigidity of the body.

In the following, the invention will be described in detail with reference to an embodiment example and the attached drawings, wherein
- Fig. 1: presents a pallet according to the invention in an oblique top view, and

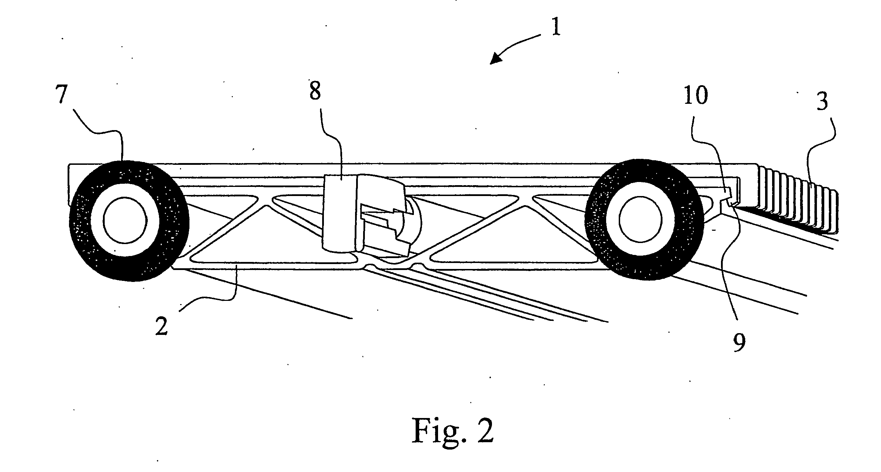

- Fig. 2: presents a more detailed end view of the pallet of the invention.

The pallet structure 1 of the invention comprises a pallet body 2, which is preferably made by extruding a suitable profile from aluminum or some other appropriate metal or alloy. In the manufacture of the profile, a certain type of profile is extruded in bars of a length well suited for manufacture, transportation or other purposes. From the these profiled bars, parts of a length exactly appropriate for the purpose are cut later during manufacture of the pallet. Thus, the same profile can be easily used for pallets of different widths, so the width of the moving track of the travelator can be easily varied. Fastened to the pallet body 2 are wheels 7 at each end of the pallet and likewise at at least one end, preferably at either end a fastening element 8 by means of which the pallet 1 is coupled to an endless cogged belt or chain or an equivalent actuating device serving to move the pallets.

A surface part extruded from plastic or corresponding material and preferably consisting of one or more surface plates 3-5 of suitable width that also contain the required corrugations in the direction of the track of motion of the pallets is fastened onto the body 2 of the pallet 1 by means of e.g. snap-on couplings or similar shape-locked couplings. Each surface plate 3-5 is provided with snap-on coupling elements or similar coupling elements 9 preferably placed in the lower part or lower surface of the surface plates at suitable points, e.g. at the ends and the middle part of the surface plates, so that the surface plates remain firmly in place on the body 2 of the pallet and that the surface plates can be easily pressed into position and likewise easily released from the body by means of a tool appropriate for the purpose. Correspondingly, placed at suitable points substantially in the upper part of the body 2 of the pallet are counterparts 10 corresponding to the above-mentioned coupling elements 9, which can be fastened to the counterparts by a shape-locked coupling.

The width of the surface plates 3-5 of the invention is preferably so defined that, using a suitable number of surface plates of the same width, it is possible to cover pallet bodies of different widths, so the same parts can be used to assemble pallets of different widths. The surface plates may also differ in width from each other. Such surface plates of a different width may be e.g. the surface plates placed at the edges of the pallet, which may have a different structure and/or coloring, or special patterning pieces whose pattern is desired to be continuous without visible boundaries.

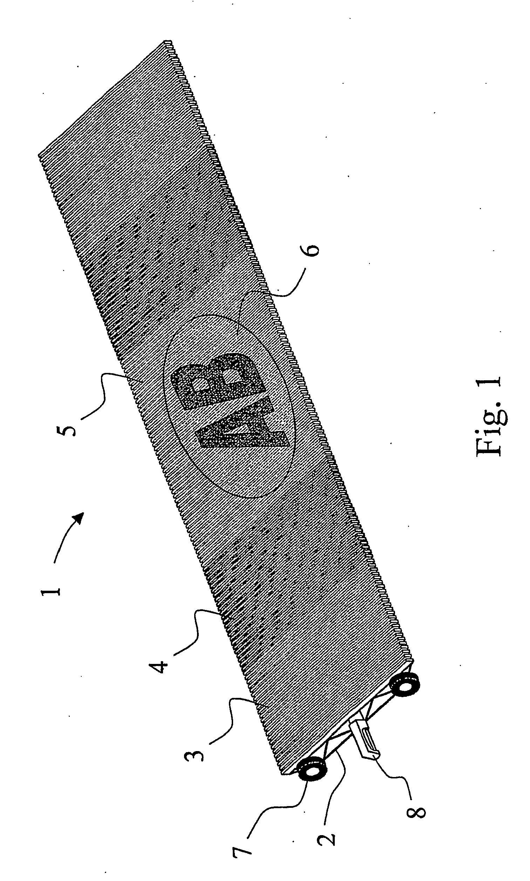

Fig. 1 presents a pallet 1 provided with surface plates 3 and 4 of different colors and also transparent or translucent surface plates 5. Under these transparent or translucent surface plates 5, between the body 2 and the surface plate 5, it is possible to place e.g. a notice, advertisement or other element varying the appearance, printed on paper, plastic or similar material, which can be illuminated from below or from the side to produce different visual effects. The transparent or translucent surface plates 5 are preferably placed in the middle part of the pallet 1. By placing surface plates of different colors at different positions in the widthwise direction of the pallet 1, it is possible to vary the appearance of successive pallets, allowing the appearance of the moving track of the travelator to be easily changed and given a different look.

The solution of the invention also allows the gap between successive pallets 1 in the travelator to be made considerably wider than in prior-art solutions, even as much as about ten times wider depending on the surfacing solutions, so that, when completely or partly transparent or translucent surface plates are used, the transparent or translucent gap thus formed can be illuminated from below to warn e.g. about the danger posed by the approaching end of the moving track. Because the attention-arousing effect of the warning light in the wide gap thus formed is very good, passengers concentrated on studying the notices or advertisements or equivalent can be effectively aroused to the danger caused by the approaching end of the moving track. When plastic elements are illuminated from the side, it also possible to produce impressive illumination effects as the light is scattered e.g. at the crests of the corrugations mentioned above.

When required, a suitable sealing surface or some other applicable sealing structure, such as a sealing lip, can also be easily fastened to the extruded plastic surfacing part 3-5, said sealing being designed to close the gap between successive pallets 1. The use of sealings improves the operating safety, among other things, and prevents small objects from falling down into the mechanical structures of the travelator.

It is obvious to the person skilled in the art that the invention is not limited to the example described above, but that it may be varied within the scope of the claims presented below. Thus, not all the above-mentioned elements need necessarily be used on one pallet. A pallet may be provided with e.g. only one kind of surface plates. Likewise, the material and method of manufacture of the pallet body may differ from the above description. For example, the pallet body may consist of two or more sections coupled together, so the length of the body in the direction of the pallet track is not limited to the conventionally or easily available maximum size determined by the extrusion or other manufacturing technique. In addition, the size, shape, structure and material of the surfacing parts of the pallets may differ from the above description. Thus, for example, the surfacing part of the pallet may be made of a material other than plastic. A good other material like this is aluminum or the like.

## Claims

1. A pallet arrangement for a travelator or equivalent, in which arrangement a pallet (1) moving on wheels (7) forms a part of a moving track, said pallet (1) consisting of at least a pallet body (2) and a surface part, and that the body (2) is provided with one or more surface plates (3-5) forming a wearing surface, whereby the body (2) is provided with wheels (7) mounted at either end of it and with a fastening element (8) at at least one end, preferably at either end, **characterised in that** the pallet body is a structure of predetermined size made from a profiled bar and that the fastening element is mounted between the wheels at the end of the pallet body, for coupling the pallet (1) to an endless cogged belt, chain or equivalent actuating means.

2. A pallet arrangement according to claim 1, **characterized in that** the body (2) of the pallet is a structure cut to a predetermined size from extruded aluminum or some other suitable metal or alloy.

3. A pallet arrangement according to claim 1 or 2, **characterized in that** the body (2) of the pallet is composed of at least two extruded pieces joined together and disposed one after the other in the longitudinal direction of the travelator.

4. A pallet arrangement according to claim 1, 2 or 3, **characterized in that** the surface plates (3-5) forming a wearing surface are surface plates of substantially equal size made by extruding from plastic or a corresponding material.

5. A pallet arrangement according to any one of the preceding claims, **characterized in that** the lower part of the surface plates (3-5) is provided with coupling elements (9) and correspondingly the upper part of the body (2) is provided with counterparts (10) to which the coupling elements (9) can be fastened by a shape-locked coupling.

6. A pallet arrangement according to any one of the preceding claims, **characterized in that** the surface plates (3, 4 and 5) are of mutually different colors, and that some of the surface plates are translucent or transparent.

7. A pallet arrangement according to any one of the preceding claims, **characterized in that** a notice, advertisement or other element (6) varying the appearance and printed on paper, plastic or equivalent has been fitted between the translucent or transparent surface plates (5) and the pallet body (2).

8. A pallet arrangement according to any one of the preceding claims, **characterized in that** it comprises illumination equipment provided under the translucent or transparent surface plates (5) and fitted to illuminate from below the notice, advertisement or other element (6) varying the appearance, placed between the surface plates (5) and the pallet body (2).

9. A pallet arrangement according to any one of the preceding claims, **characterized in that** the surface plates (3-5) are provided with a sealing fastened to their edge to seal the gap between successive pallets (1).

10. A pallet arrangement according to any one of the preceding claims, **characterized in that** at least some of the surface plates (3-5) are of aluminum or similar material in their upper surface, preferably throughout their structure.

## Patentansprüche

1. Palettenanordnung für einen Fahrsteig oder dergleichen, in welcher Anordnung eine Palette (1), die sich auf Rädern (7) bewegt, einen Teil einer Bewegungsbahn bildet, welche Palette (1) aus wenigstens einem Palettenkörper (2) und einem Oberflächenteil besteht, und dass der Körper (2) mit ein oder mehreren Oberflächenplatten (3 - 5) versehen ist, die eine Abnutzungsoberfläche darstellen, wobei der Körper (2) mit Rädern (7) versehen ist, die an dessen beiden Enden montiert sind und mit einem Befestigungselement (8) an wenigstens einem Ende, vorzugsweise an beiden Enden, **dadurch gekennzeichnet, dass** der Palettenkörper eine Struktur vorbestimmter Größe ist, die aus einem Profil hergestellt ist, und dass das Befestigungselement montiert ist zwischen den Rädern an dem Ende des Palettenkörpers, um die Palette (1) mit einem Endloszahnriemen, einer Kette oder dergleichen Betätigungseinrichtung zu verbinden.

2. Palettenanordnung nach Anspruch 1, **dadurch gekennzeichnet, dass** der Körper (2) der Palette eine Struktur ist, die aus extrudiertem Aluminium oder irgendeinem anderen Metall oder Legierung auf eine vorbestimmte Größe geschnitten ist.

3. Eine Palettenanordnung nach Anspruch 1 oder 2, **dadurch gekennzeichnet, dass** der Körper (2) der Palette aus wenigstens zwei extrudierten Teilen besteht, die miteinander verbunden sind und nacheinander in Längsrichtung des Fahrsteigs angeordnet sind.

4. Palettenanordnung nach Anspruch 1, 2 oder 3, **dadurch gekennzeichnet, dass** die Oberflächenplatten (3 - 5), die eine Abnutzungsoberfläche bilden, eine im Wesentlichen gleichen Größe haben und die aus Kunststoff oder einem entsprechenden Material extrudiert sind.

5. Palettenanordnung nach einem der vorhergehenden Ansprüche, **dadurch gekennzeichnet, dass** der untere Teil der Oberflächenplatten (3 - 5) mit Kupplungselementen (9) und entsprechend der obere Teil des Körpers (2) mit Gegenstücken (10) versehen ist, an welchen die Kupplungselemente (9) mittels einer formschlüssigen Verbindung befestigt werden können.

6. Palettenanordnung nach einem der vorhergehenden Ansprüche, **dadurch gekennzeichnet, dass** die Oberflächenplatten (3, 4 und 5) zueinander unterschiedlichen Farben aufweisen, und dass einige der Oberflächenplatten durchscheinend oder transparent sind.

7. Palettenanordnung nach einem der vorhergehenden Ansprüche, **dadurch gekennzeichnet, dass** ein Hinweis, Werbung oder irgendein anderes Element (6), das das Aussehen variiert und auf Papier, Kunststoff oder dergleichen gedruckt ist, zwischen den durchscheinenden oder transparenten Oberflächenplatten (5) und dem Palettenkörper (2) angeordnet ist.

8. Palettenanordnung nach einem der vorhergehenden Ansprüche, **dadurch gekennzeichnet, dass** sie eine Beleuchtungsausrüstung enthält, die unter den durchscheinenden oder transparenten Oberflächenplatten (5) vorgesehen und konzipiert sind, den Hinweis, Werbung oder irgendein anderes zwischen den Oberflächenplatten (5) und dem Palettenkörper (2) angeordnetes und das Aussehen veränderndes Element (6) von unten zu beleuchten.

9. Palettenanordnung nach einem der vorhergehenden Ansprüche, **dadurch gekennzeichnet, dass** die Oberflächenplatten (3 - 5) mit einer Dichtung versehen sind, die an ihrer Kante befestigt ist, um den Spalt zwischen aufeinander folgenden Paletten (1) abzudichten.

10. Palettenanordnung nach einem der vorhergehenden Ansprüche, **dadurch gekennzeichnet, dass** wenigstens einige der Oberflächenplatten (3 - 5) an ihrer Oberfläche, vorzugsweise über ihre gesamte Struktur aus Aluminium oder einem ähnlichen Material bestehen.

## Revendications

1. Système de palettes destiné à un tapis roulant ou similaire, dans lequel système une palette (1) se déplaçant sur des roues (3), constitue une partie d'un tapis mobile, ladite palette (1) étant constituée d'au moins un corps de palette (2) et d'un élément de surface et que le corps (2) est muni d'une ou de plusieurs plaques de surface (3-5) formant une surface d'usure, le corps (2) étant muni de roues (7) montée sur chaque extrémité de ce dernier et d'un élément de fixation (8) sur au moins une extrémité, préférentiellement sur chaque extrémité,
**caractérisé par le fait que** le corps de palette est une structure de taille prédéfinie constituée d'une barre profilée et que l'élément de fixation est monté entre les roues à l'extrémité du corps de palette afm de coupler la palette (1) à une courroie dentée sans fin, une chaîne ou un autre moyen d'actionnement similaire.

2. Système de palettes selon la revendication 1,
**caractérisé par le fait que** le corps (2) de la palette est une structure coupée à une dimension prédéterminée réalisée à partir d'aluminium extrudé ou de tout autre métal ou alliage adapté.

3. Système de palettes selon la revendication 1 ou 2,
**caractérisé par le fait que** le corps (2) des palettes est composé d'au moins deux éléments extrudés assemblés et disposés l'un derrière l'autre dans le sens longitudinal du tapis roulant.

4. Système de palettes selon la revendication 1, 2 ou 3,
**caractérisé par le fait que** les plaques de surface (3-5) formant une surface d'usage sont des plaques de surface de dimension essentiellement égale réalisées par l'extrusion de matière plastique ou d'un matériau correspondant.

5. Système de palettes selon l'une quelconque des revendications précédentes,
**caractérisé par le fait que** la partie inférieure des plaques de surface (3-5) est munie d'éléments de couplage (9) et de manière correspondante la partie supérieure du corps (2) est munie dé contre-pièces (10) auxquelles les éléments de couplage (9) peuvent être fixés par un couplage en prise stable.

6. Système de palettes selon l'une quelconque des revendications précédentes,
**caractérisé par le fait que** les plaques de surface (3, 4 et 5) sont mutuellement de couleurs différentes, et qu'une partie des plaques de surface sont translucides ou transparentes.

7. Système de palettes selon l'une quelconque des revendications précédentes,
**caractérisé par le fait qu'**une affiche, une publicité ou tout autre élément (6) modifiant l'apparence et imprimé sur du papier, une matière plastique ou similaire a été fixé(e) entre les plaques de surface translucides ou transparentes (5) et le corps des palettes (2).

8. Système de palettes selon l'une quelconque des revendications précédentes,
**caractérisé par le fait qu'**il comporte un équipement d'éclairage situées sous les plaques de surface translucides ou transparentes (5) et prévues pour éclairer par le dessous l'affiche, la publicité ou tout autre élément (6) modifiant l'apparence placé(s) entres les plaques de surface (5) et le corps des palettes (2).

9. Système de palettes selon l'une quelconque des revendications précédentes,
**caractérisé par le fait que** les plaques de surface (3-5) sont munies d'un joint fixé à leur bord destiné à colmater l'intervalle entre les palettes successives (1).

10. Système de palettes selon l'une quelconque des revendications précédentes,
**caractérisé par le fait qu'**au moins une partie des plaques de surface (3-5) est constituée d'aluminium ou d'un matériau similaire dans leur surface supérieure, préférentiellement dans leur entière structure.
